# EUROPEAN PATENT SPECIFICATION

(11) **EP 3 810 416 B1**
(45) Date of publication and mention of the grant of the patent: **19.11.2025**
(21) Application number: 19734916.0
(22) Date of filing: 10.06.2019
(51) Int. Cl.: B32B 5/02, B32B 5/10, B32B 5/26, B32B 7/12, B32B 9/02, B32B 25/10, B32B 27/20, B32B 27/32

(54) **ANTI-NOISE PANEL FOR FLOORS**
LÄRMSCHUTZPLATTE FÜR FUSSBÖDEN
PANNEAU ANTI-BRUIT POUR PLANCHERS

(30) Priority: 12.06.2018 IT 201800006247
(43) Date of publication of application: 28.04.2021
(73) Proprietor: IWIS Insulation Waterproofing Industrial Systems S.R.L., 31029 Vittorio Veneto (TV) (IT)
(72) Inventor: CAIS, Federico, 31020 San Vendemiano (TV) (IT)
(74) Representative: Frare, Paolo
(86) International application number: PCT/IB2019/054822
(87) International publication number: WO 2019/239290

(56) References cited:
- EP-A1- 3 015 265
- EP-A1- 3 228 448
- ES-A1- 2 360 440
- FR-A1- 2 951 991

## Description

The present invention relates to an anti-noise panel for floors.

The problem of soundproofing buildings is increasingly felt nowadays.

In particular, the need is known to reduce both the aerial and footfall noise transmitted through the floor of a first room to a second room below.

Such need is particularly felt in the cases in which the floor is covered by tiles or stone sheets (for example marble) because such materials, unlike for example carpet, generate an increased noise level when they are treaded on given that they are very rigid.

A first known system for attempting to reduce the transmission of noise through a floor is the one of spreading a sound-absorbing foam material over the bottom of the floor, covering it with a screed of at least 5 cm of mortar and/or cement, and once the screed has solidified, installing a layer of tiles or stone sheets to cover such screed.

However, such known system has certain drawbacks; in particular, the screed in general requires at least twenty days to completely solidify, which significantly increases the time for making the floor.

Moreover, such known type of system does not lend itself to being used in the renovation of pre-existing buildings, where there is for example the need to install a new floor where one already exists; it is indeed common in such situations to install the new floor directly over the old one, without removing the latter beforehand because the removal of the old floor could result in very high operating time and costs. In these cases, the increased thickness of the screed creates an inconvenient and unpleasant step at the perimeter edges of the recovered floor (for example, at the entrance to a room or flat), and in many cases results in the doors requiring cutting or replacing to be adapted to the increased thickness of the floor.

Solutions are also known providing the use of anti-noise panels comprising a layer of fibrous material covered by a layer of bitumen enclosed between two layers of glass fibre encompassed therein prior to the solidification thereof, and in turn covered by a layer of mineral granules.

Such panels in particular are used in the renovation of floors in buildings when there is the need not to remove the pre-existing floor, rather the same is to be covered with the new one; indeed such known panels have reduced thicknesses which have little effect on the final thickness of the new floor.

However, also such known solutions have certain drawbacks; in particular, the anti-noise panels of known type contain bitumen, thus having certain usage limitations in indoor environments.

Moreover, the mineral granules present in such known solutions tend to detach, in particular during the movement and handling thereof, with the subsequent risk of soiling the room where they are installed and/or the environments where they are transported/stored.

ES2360440A1 discloses a sound insulating sheet consisting in a sheet material formed by a plurality of superposed layers comprising: a first adhesive layer comprising an adhesive material, an insulating layer comprising a viscoelastic material, and a second adhesive layer comprising an adhesive material, wherein the insulating layer is disposed between the first and second adhesive layers.

It is therefore the main object of the present invention to obviate the above drawbacks, and in particular the one of obtaining an anti-noise panel which allows significantly reducing the transfer of both aerial and footfall noise from a first room to a second room below, and that may be used without particular limitations also in indoor environments.

It is another object of the present invention to obtain an anti-noise panel which has a reduced thickness, so as to be effectively used also in the case of covering of a pre-existing floor.

It is a further object of the present invention to be easily implemented in short periods of time.

It is another object again of the present invention to obtain an anti-noise panel that allows making or renovating a floor in very short periods of time, also in the order of one day.

It is a further object of the present invention to make an anti-noise panel that may be used under clean conditions, in particular without releasing granules or dust like the known technique described above.

It is another object again of the present invention to make an anti-noise panel that may be transported to the place of use in an easy and quick manner.

These and other objects according to the present invention are achieved by making an anti-noise panel for floors that comprises a first layer of non-bituminous plastic material, filled with a mineral filler, adapted to absorb the noise, enclosed between a second and a third layer having different dynamic stiffness, so as to damp, respectively, different sound frequencies, characterized in that said second layer and/or said third layer consist of or comprise non-woven fabric and/or cork and/or recycled rubber and/or polyurethane foam.

The lack of bitumen in the first layer, and in general in the anti-noise panel according to the invention, ensures the same may be used without particular restrictions also in indoor environments, such as flats, offices, etc.

Preferably, the dynamic stiffnesses of the second and third layer, which in any case are different from each other, is comprised in the range between 5 and 100 MN/m³.

It is worth noting that the dynamic stiffness, which is expressed in MN/m³, indicates the ability of a material to oppose the vibrations of a structure stressed by a source of noise from impact (such as for example, footfall) or aerial noise. The lower the dynamic stiffness value, the better the soundproofing performance. Dynamic stiffness is a parameter that encompasses the elastic and damping properties of the material, including the air enclosed in the cells thereof, and may be determined based on Standard UNI EN 29052-1.

As mentioned above, having different dynamic stiffnesses, the second and third layer are capable of effectively damping different sound frequencies, therefore increasing the performance of the anti-noise panel in relation to the damping of the noise from impact (footfall).

The mineral filler present in the first layer increases the density thereof, thus contributing to the noise absorbing effect, in particular noise of aerial type.

It is worth noting that the greater the density of the first layer, the greater the absorbing effect on the noise of aerial type.

In particular, it is preferable for the density of the first layer to be greater than 1.35 g/cm³ in order to effectively absorb the aerial noises.

The use in the anti-noise panel of the three layers with particular density and dynamic stiffness characteristics according to the invention, allows an optimal damping and absorption of the aerial and footfall noises typically present in buildings.

In an advantageous embodiment, the second layer consists of or comprises non-woven fabric and/or cork and/or recycled rubber and/or polyurethane foam.

In an advantageous embodiment, the third layer consists of or comprises non-woven fabric and/or cork and/or recycled rubber and/or polyurethane foam.

Preferably, the mineral filler in the first layer is present in a percentage from 70% to 90% by weight with respect to the total weight of the first layer (comprising the weight of the non-bituminous plastic material and of the filler itself).

More preferably, such mineral filler is present in a percentage of 80% by weight with respect to the total weight of the first layer (comprising the weight of the non-bituminous plastic material and of the mineral filler itself).

Such advantageous concentrations of the mineral filler allow obtaining a sufficiently high density of the first layer so as to ensure an optimal absorption of the noise.

In an advantageous embodiment, the mineral filler comprises or consists of calcium carbonate and/or talc and/or perlite and/or basalt powder and/or barite, or a mixture of such materials.

In a preferred embodiment, the non-bituminous plastic material of the first layer is or comprises a mixture of polymers.

More preferably, the non-bituminous plastic material is or comprises a mixture of virgin or regenerated polyolefin copolymers or a combination of both.

In a further advantageous embodiment, the anti-noise panel comprises two containment layers made of a material capable of containing the non-bituminous plastic material even when the same is in liquid condition, which are positioned to enclose below and above the first layer.

Preferably, the non-bituminous plastic material is deposited in the liquid state, by casting, onto one of the containment layers, the other of such containment layers being positioned above the first layer prior to the solidification thereof.

Advantageously, the thickness of the two containment layers is adjusted by means of a calendering process.

Advantageously, the second and third layer are fastened to the first layer or, if this is enclosed by the two containment layers, to the assembly formed by the first layer and by the two containment layers, by means of an adhesive polymer layer, or by means of a heatcalendering process.

The use of an adhesive polymer layer for fastening contributes to increasing the overall damping effect of the anti-noise panel; indeed, by having a different density with respect to the other layers of the anti-noise panel, the adhesive polymer layer performs a damping effect on different sound frequencies with respect to those of the first, second and third layer, therefore increasing the range of frequencies that are damped. Advantageously, the thickness of the adhesive polymer layer is in the order of a few tenths of a millimetre, preferably comprised between 0.1-0.9 mm.

In an advantageous embodiment, the containment layers are made of glass fibre or of non-woven polyester fabric or polypropylene reinforced with a glass fibre.

In a preferred embodiment, the second and third layer are made of non-woven fabric of the needle punched type. More preferably, the second and third layer are made of non-woven fabric of the needle punched polypropylene type.

In a preferred embodiment, the second layer, preferably but not necessarily made of non-woven fabric, has a weight per square meter of 250-500 g/m². More preferably, the second layer has a weight per square meter of 400 g/m².

In a preferred embodiment, the third layer, preferably but not necessarily made of non-woven fabric, has a weight per square meter of 40-200 g/m². More preferably, the third layer has a weight per square meter of 150 g/m².

In a preferred embodiment, the second layer has a thickness comprised between 2-4 mm. More preferably, the second layer has a thickness of 3 mm.

In a preferred embodiment, the overall thickness of the first layer and of the containment layers associated therewith is comprised between 3-5 mm.

More preferably, the overall thickness of the first layer and of the containment layers is of 4 mm.

In a preferred embodiment, the third layer has a thickness comprised between 0.5-1.5 mm. More preferably, the third layer has a thickness of 1 mm.

In a preferred embodiment, the overall thickness of the anti-noise panel according to the invention is comprised between 5.5-10 mm. More preferably, the overall thickness thereof is 7.5 mm.

In a preferred embodiment, the weight per unit of area of the anti-noise panel according to the invention is comprised between 4.5 and 8.5 kg/m², more preferably 6.5 kg/m².

The features and advantages of the anti-noise panel for floors according to the present invention will be more apparent from the following description, which is to be understood as exemplifying and not limiting, with reference to the schematic attached drawings, wherein:

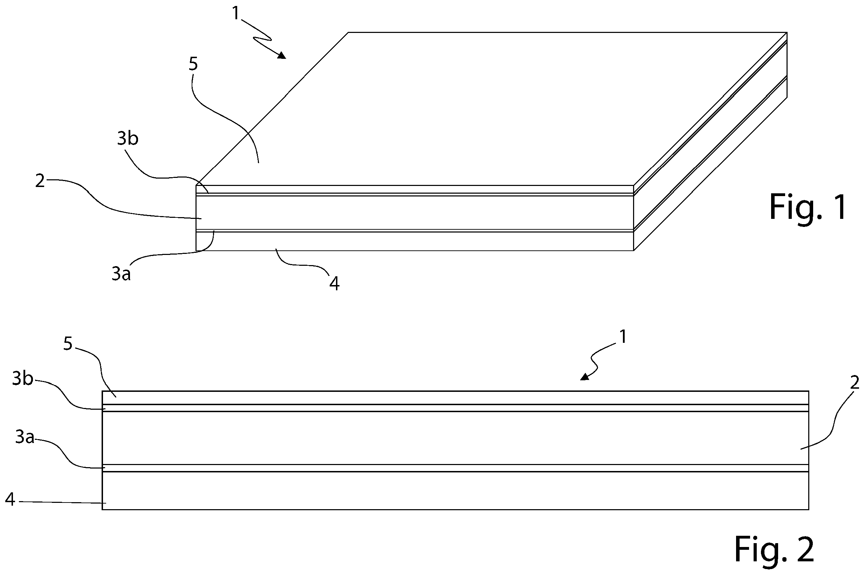

- figure 1 is a perspective schematic view of an anti-noise panel according to the invention;
- figure 2 is a raised side schematic view of an anti-noise panel according to the invention;
- figure 3 is a raised side schematic view of an anti-noise panel according to the invention, applied to a floor.

With reference to the accompanying drawings, an anti-noise panel for floors is indicated as a whole with number 1.

The anti-noise panel 1 comprises a first layer 2 of non-bituminous plastic material, filled with a mineral filler, adapted to absorb noise, in particular noise of aerial type.

Advantageously, the first layer effectively absorbs the noise in a range of frequencies comprised between 100 and 400 Hz.

The first layer 2 is enclosed between a second layer 4 and a third layer 5 having dynamic stiffnesses different from each other; in particular, although such dynamic stiffnesses are different, they are preferably comprised between 5 and 100 MN/m³.

Advantageously, the second layer 4 consists of or comprises non-woven fabric and/or cork and/or recycled rubber and/or polyurethane foam.

Preferably, the third layer 5 consists of or comprises non-woven fabric and/or cork and/or recycled rubber and/or polyurethane foam.

The second and the third layer may both consist of or comprise the same material, or each consist of or comprise a different type of material; for example, the second layer 4 may consist of non-woven fabric and the third layer may be cork or, as in the preferred example illustrated in the accompanying drawings, the second and the third layer may both be made of the same type of non-woven fabric (but for example, with different thicknesses and accordingly different weight per square meter).

In the preferred embodiment illustrated in the accompanying drawings, the second and third layer 4, 5 are made of non-woven fabric of the needle punched type, preferably of polypropylene.

Preferably, the second layer 4 has a weight per square meter of 250-500 g/m², more preferably 400 g/m².

Advantageously, the third layer 5 has a weight per square meter of 40-200 g/m², more preferably 150 g/m².

The different weights per square meter of the second and third layer may be obtained for example, by using different materials for them or using a same material for them, but with different thicknesses.

The different weight per square meter of the second and third layer results in different dynamic stiffness, and therefore a different damping effect on the different sound frequencies, in particular of footfall noise.

In particular, a layer of non-woven needle punched polypropylene fabric of 400 g/m2 is able to effectively shield the medium-to-high frequencies, and beyond 800 Hz, while a layer of needle punched non-woven polypropylene fabric of 150 g/m3 effectively shields frequencies from 400 to 630 Hz. The non-bituminous plastic material of the first layer 2 is filled with a mineral filler, preferably present in a percentage from 70% to 90% by weight with respect to the total weight of the first layer 2 (comprising the weight of the non-bituminous plastic material and of the mineral filler itself). In a preferred embodiment, the mineral filler is present in a percentage of 80% by weight with respect to the total weight of the first layer (comprising the weight of the non-bituminous plastic material and of the mineral filler itself).

The effect of the mineral filler is the one of increasing the density of the first layer 2; the greater the density of such first layer, the greater the noise absorption effect, in particular of the aerial noise.

Preferably, the mineral filler comprises or consists of calcium carbonate and/or talc and/or perlite and/or basalt powder and/or barite, or a mixture of such materials.

Preferably, the non-bituminous plastic material of the first layer 1 is or comprises a mixture of polymers.

Advantageously, such mixture of polymers has a softening temperature similar to the one of the bitumen. Advantageously, such temperature is comprised between 75 and 150°C, more preferably 110°C.

In an advantageous embodiment, the non-bituminous plastic material is or comprises a mixture of virgin or regenerated polyolefin copolymers or a combination of both.

In the advantageous embodiment, but not necessarily, illustrated in the accompanying drawings, the anti-noise panel 1 comprises two containment layers 3a, 3b, made of a material capable of containing the non-bituminous plastic material even when the same is in liquid condition.

This, in particular, allows obtaining the first layer 1 by means of the same process used today for making bitumen panels. In a preferred embodiment for example, after positioning one of the two containment layers, for example panel 3a, in horizontal position, the non-bituminous plastic material filled with a mineral filler may be heated up to bringing the same to the liquid state, after which it is deposited by casting onto the containment layer 3a, and is covered with the containment layer 3b; once the non-bituminous plastic material has solidified, the two containment layers 3b and 3a remain constrained to enclose the same above and below.

Advantageously, the thickness of the two containment layers 3a, 3b may be adjusted by means of a calendering process.

Advantageously, the second layer 4 and the third layer 5 are fastened to the first layer 2 or, if this is enclosed by the two containment layers 3a, 3b, to the assembly formed by the first layer 2 and by the two containment layers 3a, 3b, by means of an adhesive polymer layer (not shown) or by means of a heatcalendering process.

The use of such an adhesive polymer layer contributes to increase the overall damping effect of the anti-noise panel 1; indeed, by having a different density with respect to the other layers of the anti-noise panel 1, the adhesive polymer layer performs a damping effect on different sound frequencies with respect to those of the first, second and third layer, therefore increasing the range of frequencies that are damped. Advantageously, the thickness of the adhesive polymer layer is in the order of a few tenths of a millimetre, preferably comprised between 0.1-0.9 mm.

In an advantageous embodiment, the containment layers 3a, 3b are made of glass fibre or of non-woven polyester fabric or polypropylene reinforced with a glass fibre.

Preferably, the second layer 4 has a thickness comprised between 2-4 mm, more preferably 3 mm.

Preferably, the third layer 5 has a thickness comprised between 0.5-1.5 mm, more preferably 1 mm.

Preferably, the overall thickness of the first layer 2 and of the containment layers 3a, 3b is comprised between 3-5 mm, more preferably 4 mm.

Advantageously, the overall thickness of the anti-noise panel 1 is comprised between 5.5-10 mm, preferably 7.5 mm.

Advantageously, the weight per unit of area of the anti-noise panel 1 is comprised between 4.5 and 8.5 kg/m², more preferably 6.5 kg/m².

The operation of the anti-noise panel according to the invention is as follows.

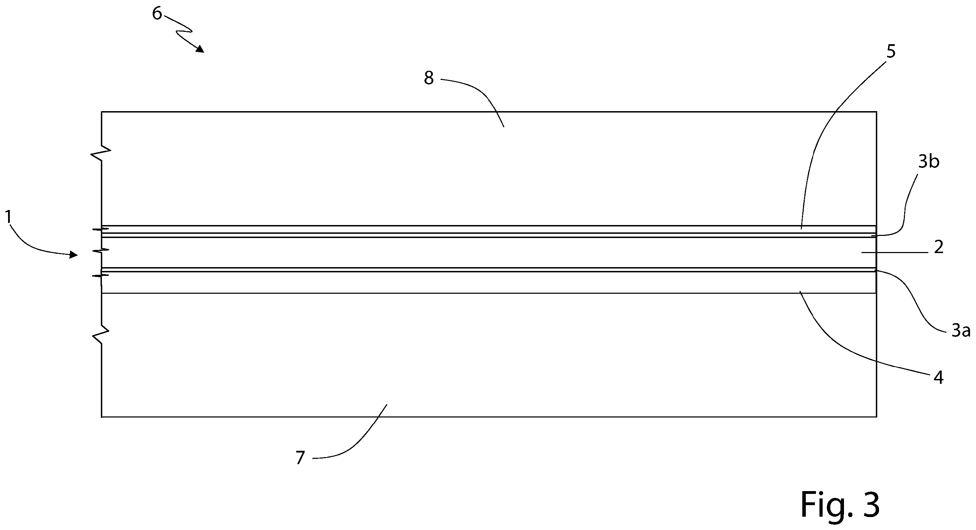

With reference to figure 3, a floor 6 may be made by arranging an anti-noise panel 1, or a plurality thereof, adjacent to one another, on a bottom 7, which may be for example a screed, or a floor made beforehand (for example, a layer of tiles or marble sheets, etc.). The second layer 4 of the anti-noise panel 1 may be glued to the bottom 7, for example by means of a cement or polyurethane glue of known type.

After installing one or more anti-noise panels 1 adjacent to one another to completely cover the bottom 7, a covering 8 may be installed over the third layer 5 of the anti-noise panel 1 and glued to such third layer 5, for example by means of a specific glue, such as for example a cement glue.

The covering 8 may consist of or comprise tiles, marble sheets, etc.

Once the glue interposed between the covering 8 and the anti-noise panel 1 has adhered and solidified, the floor 6 is ready to be used.

Therefore, the time for making the floor 6 is very short, also less than one day.

The presence of the first, second and third layer, having different and specific damping and noise absorption characteristics, allows effectively damping both aerial noise and noise from impact, such as footfall, thus ensuring an optimal soundproofing between the rooms separated by the floor 6.

Tests performed on an anti-noise panel made according to the invention, in particular using an overall thickness of the panel of 7.5 mm (overall thickness of first layer and containment layers equal to 3.5 mm, thickness of second layer equal to 3 mm, thickness of third layer equal to 1 mm), a weight per unit of surface of the panel of 6.5 kg/kg/m², a weight per unit of surface of the second layer equal to 400 g/m² and a weight per unit of surface of the third layer equal to 150 g/m², have allowed obtaining a noise abatement certified according to Standard EN ISO 10140-3 EN ISO 717-2 equal to 21 dB, with the material installed with glue on the screed and therefore covered with cement glue and tiles. A floor obtained using the same anti-noise panel also obtained the "LIGHT COMMERCIAL" rating in the Robinson Wheel Test ASTM C957.

The lack of bitumen makes the anti-noise panel according to the invention usable indoors without particular restrictions.

The thickness of the anti-noise panel according to the invention is rather reduced and therefore lends itself to a use of the panel also for the covering of a pre-existing floor.

As noted above, the use of an anti-noise panel according to the invention allows making a floor in very short periods of time.

Since the anti-noise panel according to the invention does not have granules or other parts which are easy to separate therefrom, it does not have the cleaning problems encountered in the mentioned known technique. The anti-noise panel according to the invention also has a rather reduced specific weight, which facilitates the transport, handling and installation thereof.

The features of the anti-noise panel of the present invention, as well as the relative advantages thereof, are evident from the above description.

Finally, it is apparent that the anti-noise panel thus conceived is susceptible to many modifications and variants, all falling within the scope of the claims; moreover, all the details can be replaced by technically equivalent elements falling within the scope of the claims. In practice, the materials used, as well as their dimensions, can be of any type according to the technical requirements.

## Claims

1. Anti-noise panel (1) for floors, comprising a first layer (2) of non-bituminous plastic material, filled with a mineral filler, adapted for absorbing noise, enclosed between a second layer (4) and a third layer (5) having different dynamic stiffness, so as to damp, respectively, different sound frequencies, **characterized in that** said second layer (4) and/or said third layer (5) consist of or comprise non-woven fabric and/or cork and/or recycled rubber and/or polyurethane foam.

2. Anti-noise panel (1) according to one or more of the preceding claims, **characterized in that** said second layer (4) has a weight per square meter comprised between 250-500 g/m².

3. Anti-noise panel (1) according to one or more of the preceding claims, **characterized in that** said third layer (5) has a weight per square meter of 40-200 g / m2.

4. Anti-noise panel (1) according to one or more of the preceding claims, **characterized in that** said mineral filler is present in a percentage from 70% to 90% by weight with respect to the total weight of said first layer (2).

5. Anti-noise panel (1) according to one or more of the preceding claims, **characterized in that** said non-bituminous plastic material is or comprises a mixture of polymers.

6. Anti-noise panel (1) according to one or more of the preceding claims, **characterized in that** it comprises two containment layers (3a, 3b), made of a material capable of containing said non-bituminous plastic material even when the same is in liquid condition, positioned to enclose below and above the first layer (1) .

7. Anti-noise panel (1) according to one or more of the preceding claims, **characterized in that** said second layer (4) has a thickness comprised between 2-4 mm.

8. Anti-noise panel (1), as in claim 6 or 7, **characterized in that** the overall thickness of said first layer (2) and said containment layers (3a, 3b) associated to it is comprised between 3- 5 mm.

9. Anti-noise panel (1) according to one or more of the preceding claims, **characterized in that** said third layer (5) has a thickness comprised between 0.5-1.5 mm.

## Patentansprüche

1. Lärmschutzplatte (1) für Fußböden, die eine erste Schicht (2) aus nicht bituminösem Kunststoffmaterial umfasst, die mit einem mineralischen Füllstoff gefüllt ist, der geeignet ist, Lärm zu absorbieren, und die zwischen einer zweiten Schicht (4) und einer dritten Schicht (5) umschlossen ist, die eine unterschiedliche dynamische Steifigkeit aufweisen, um jeweils unterschiedliche Schallfrequenzen zu dämpfen, **dadurch gekennzeichnet, dass** die zweite Schicht (4) und/oder die dritte Schicht (5) aus Vliesstoff und/oder Kork und/oder recyceltem Gummi und/oder Polyurethanschaum bestehen oder diese umfassen.

2. Lärmschutzplatte (1) nach einem oder mehreren der vorhergehenden Ansprüche, **dadurch gekennzeichnet, dass** die zweite Schicht (4) ein Quadratmetergewicht zwischen 250-500 g/m2 aufweist.

3. Lärmschutzplatte (1) nach einem oder mehreren der vorhergehenden Ansprüche, **dadurch gekennzeichnet, dass** die dritte Schicht (5) ein Quadratmetergewicht von 40-200 g/m2 hat.

4. Lärmschutzplatte (1) nach einem oder mehreren der vorhergehenden Ansprüche, **dadurch gekennzeichnet, dass** der mineralische Füllstoff in einem Prozentsatz von 70 bis 90 Gew.- % in Bezug auf das Gesamtgewicht der ersten Schicht (2) vorhanden ist.

5. Lärmschutzplatte (1) nach einem oder mehreren der vorhergehenden Ansprüche, **dadurch gekennzeichnet, dass** das nicht bituminöse Kunststoffmaterial ein Gemisch aus Polymeren ist oder umfasst.

6. Lärmschutzplatte (1) nach einem oder mehreren der vorhergehenden Ansprüche, **dadurch gekennzeichnet, dass** sie zwei Aufnahmeschichten (3a, 3b) umfasst, die aus einem Material bestehen, das in der Lage ist, das nicht bituminöse Kunststoffmaterial auch dann aufzunehmen, wenn es sich in flüssigem Zustand befindet, und das so positioniert ist, dass es unterhalb und oberhalb der ersten Schicht (1) umschlossen ist.

7. Lärmschutzplatte (1) nach einem oder mehreren der 5 vorhergehenden Ansprüche, **dadurch gekennzeichnet, dass** die zweite Schicht (4) eine Dicke zwischen 2-4 mm aufweist.

8. Lärmschutzplatte (1) nach Anspruch 6 oder 7, **dadurch gekennzeichnet, dass** die Gesamtdicke der ersten Schicht (2) und der mit ihr assoziierten Aufnahmeschichten (3a, 3b) zwischen 3-5 mm beträgt.

9. Lärmschutzplatte (1) nach einem oder mehreren der vorhergehenden Ansprüche, **dadurch gekennzeichnet, dass** die dritte Schicht (5) eine Dicke zwischen 0,5-1,5 mm aufweist.

## Revendications

1. Panneau antibruit (1) pour planchers, comprenant une première couche (2) en matériau plastique non bitumineux, remplie d'une charge minérale, adaptée à l'absorption du bruit, enfermée entre une deuxième couche (4) et une troisième couche (5) ayant une rigidité dynamique différente, de manière à amortir, respectivement, différentes fréquences sonores, **caractérisé en ce que** ladite deuxième couche (4) et/ou ladite troisième couche (5) consistent en ou comprennent du tissu non tissé et/ou du liège et/ou du caoutchouc recyclé et/ou de la mousse de polyuréthane.

2. Panneau antibruit (1) selon l'une ou plusieurs des revendications précédentes, **caractérisé en ce que** ladite deuxième couche (4) a un poids au mètre carré compris entre 250 et 500 g/m2.

3. Panneau antibruit (1) selon l'une ou plusieurs des revendications précédentes, **caractérisé en ce que** ladite troisième couche (5) a un poids au mètre carré de 40 à 200 g/m2.

4. Panneau antibruit (1) selon l'une ou plusieurs des revendications précédentes, **caractérisé en ce que** ladite charge minérale est présente dans un pourcentage de 70 % à 90 % en poids par rapport au poids total de ladite première couche (2).

5. Panneau antibruit (1) selon l'une ou plusieurs des revendications précédentes, **caractérisé en ce que** ledit matériau plastique non bitumineux est ou comprend un mélange de polymères.

6. Panneau antibruit (1) selon l'une ou plusieurs des revendications précédentes, **caractérisé en ce qu'**il comprend deux couches de confinement (3a, 3b), constituées d'un matériau pouvant contenir ledit matériau plastique non bitumineux même lorsque celui-ci est à l'état liquide, positionnées de manière à enfermer au-dessous et au-dessus de la première couche (1).

7. Panneau antibruit (1) selon l'une ou plusieurs des 5 revendications précédentes, **caractérisé en ce que** ladite deuxième couche (4) a une épaisseur comprise entre 2 et 4 mm.

8. Panneau antibruit (1), selon la revendication 6 ou 7, **caractérisé en ce que** l'épaisseur totale de ladite première couche (2) et desdites couches de confinement (3a, 3b) qui lui sont associées est comprise entre 3 et 5 mm.

9. Panneau antibruit (1) selon l'une ou plusieurs des revendications précédentes, **caractérisé en ce que** ladite troisième couche (5) a une épaisseur comprise entre 0,5 et 1,5 mm.
